(19) Europäisches Patentamt / European Patent Office / Office européen des brevets

(11) **EP 1 639 959 B1**

(12) **EUROPÄISCHE PATENTSCHRIFT**

(45) Veröffentlichungstag und Bekanntmachung des Hinweises auf die Patenterteilung:
**07.04.2010  Patentblatt 2010/14**

(51) Int Cl.:
*A61C 1/05* ^(2006.01)      *A61C 1/00* ^(2006.01)

(21) Anmeldenummer: **05020711.7**

(22) Anmeldetag: **22.09.2005**

(54) **Zahnärztliche Behandlungsvorrichtung mit variabler Kühlung**

Dental treatment device with variable cooling

Dispositif de traitement dentaire avec refroidissement variable

(84) Benannte Vertragsstaaten:
**CH DE FR IT LI**

(30) Priorität: **23.09.2004  DE 102004046156**

(43) Veröffentlichungstag der Anmeldung:
**29.03.2006  Patentblatt 2006/13**

(73) Patentinhaber: **Kaltenbach & Voigt GmbH**
**88400 Biberach / Riss (DE)**

(72) Erfinder:
• **Gugel, Bernd**
**89079 Ulm (DE)**
• **Schöpperle, Jörg**
**88471 Laupheim (DE)**

(74) Vertreter: **Schmidt-Evers, Jürgen et al**
**Mitscherlich & Partner**
**Patent- und Rechtsanwälte**
**Sonnenstrasse 33**
**80331 München (DE)**

(56) Entgegenhaltungen:
**EP-A- 0 890 344    WO-A-91/00067**
**US-A- 2 984 008    US-A- 3 568 318**

**Beschreibung**

Die vorliegende Erfindung betrifft eine Behandlungsvorrichtung gemäß dem Oberbegriff des Anspruchs 1, welche ein von einer Antriebseinheit angetriebenes Werkzeug sowie Mittel zum Zuführen eines Kühlmediums zu einer von dem Werkzeug bearbeiteten Behandlungsstelle aufweist. Insbesondere betrifft die vorliegende Erfindung ein zahnärztliches Behandlungsinstrument mit einem von einem Antrieb in Rotation versetzbaren Bohrer.

Bei der Behandlung von Karies oder anderen zahnärztlichen Behandlungen sind Arbeitsschritte, in denen ein Teil der Zahnsubstanz abgetragen werden muß, oftmals unerläßlich. Das klassische Behandlungswerkzeug zum Durchführen derartiger Arbeiten ist ein zahnärztlicher Bohrer, der im Kopfbereich eines Behandlungsinstruments angeordnet ist und mittels einer Antriebseinheit in Rotation versetzt wird. Je nach Ausgestaltung der Oberfläche des Bohrers sowie des Antriebs kann dann eine bestimmte Abtragsleistung eingestellt werden. Dabei bieten moderne zahnärztliche Handinstrumente insbesondere auch die Möglichkeit, die Leistung zu variieren.

Bei allen zahnärztlichen Behandlungen zu berücksichtigen, dass der menschliche Zahn ein lebender Organismus ist, der über die sogenannte Pulpa mit dem restlichen Organismus verbunden ist. Bei der Behandlung eines Zahns, insbesondere beim Abtragen von Zahnmaterial mittels eines Bohrers entsteht nun an bzw. in dem Zahn Wärme, wobei wissenschaftliche Untersuchungen gezeigt haben, dass bei Temperaturen oberhalb von 41 ° C die Pulpa abstirbt und dementsprechend eine Schädigung des Zahn eintritt.

Um dementsprechend zu vermeiden, dass während der Behandlung Temperaturen von mehr als 41° C an der Pulpa auftreten, ist es seit langem bekannt, der von dem Bohrer bearbeiteten Behandlungsstelle ein Kühlmedium, beispielsweise Wasser, Luft oder ein Wasser-Luft-Gemisch zuzuführen. Als besonders wirksam in Bezug auf die erwünschte Kühlung hat sich insbesondere die Kühlung über ein Wasser-Luft-Gemisch in Form eines Sprays erwiesen, wobei als allgemeine Regel akzeptiert ist, dass eine Kühlmenge von 50 ml pro Minute eine ausreichende Kühlung bewirken. Diese Erkenntnis basiert wiederum auf wissenschaftlichen Untersuchungen. Das Wasser-Luft-Gemisch bzw. Spray wird dann durch im Kopfbereich des zahnärztlichen Instruments befindliche Düsen auf die Behandlungsstelle gerichtet.

Nachteilig an der bekannten Spraykühlung ist allerdings, dass hierdurch die Sicht auf das Präparationsfeld durch einen Aerosolnebel bestehend aus Wasser, Luft und abgetragenen Partikeln des Zahn verschlechtert wird. Diese Aerosolwolke tritt während der Behandlung aus dem Mund des Patienten aus und kontaminiert die Umgebung des zahnärztlichen Behandlungsplatzes. Da das Wasser-Luft-Gemisch ferner durch den Behandler eingeatmet wird, besteht darüber hinaus auch eine erhöhte Infektionsgefahr.

Dokument US 3 568 318 offenbart eine Behandlungsvorrichtung gemäß dem Oberbegriff des Anspruchs 1.

Die während der Behandlung vom Zahnarzt eingesetzte und benötigte Abtragsleistung ist starken Schwankungen unterworfen. Um sicherzustellen, dass selbst bei der maximalen in der Praxis noch üblichen Abtragsleistung eine ausreichende Kühlung erfolgt, muß dementsprechend die Spraymenge derart eingestellt werden, dass diese auch für diese hohen Leistungsbereiche noch ausreichend ist. Dies führt zu der bereits oben erwähnten üblicherweise verwendeten Kühlmenge von 50 ml Wasser pro Minute.

Der vorliegenden Erfindung liegt die Aufgabe zugrunde, eine verbesserte Möglichkeit zur Kühlung der Behandlungsstelle während einer zahnärztlichen Behandlung anzugeben, wobei allerdings die im Zusammenhang mit einer Spraykühlung oben erwähnten Nachteile vermieden werden sollen.

Die Aufgabe wird durch eine Behandlungsvorrichtung, welche die Merkmale des Anspruchs 1 aufweist, gelöst. Vorteilhafte Weiterbildungen der vorliegenden Erfindung sind Gegenstand der Unteransprüche.

Der erfindungsgemäßen Lösung liegt die Idee zugrunde, die Menge des der Behandlungsstelle zugeführten Kühlmediums an die aktuell von dem Benutzer der Behandlungsvorrichtung benötigte Abtragsleistung zu koppeln. Erfindungsgemäß wird dementsprechend eine Behandlungsvorrichtung vorgeschlagen, welche ein von einer Antriebseinheit angetriebenes Werkzeug sowie Mittel zum Zuführen eines Kühlmediums zu einer von dem Werkzeug bearbeiteten Behandlungsstelle aufweist, wobei die Menge des der Behandlungsstelle zugeführten Kühlmediums von der aktuellen Abtragsleistung des Werkzeugs oder dem von dem Werkzeug ausgeübten Drehmoment abhängig ist.

Gemäß der vorliegenden Erfindung wird somit die maximale Spraymenge nur dann zugeführt, wenn sie auch tatsächlich benötigt wird, wenn also der Zahnarzt die maximale Abtragsleistung bzw. das maximale Drehmoment abruft. Da der Arzt allerdings diese maximale Abtragsleistung nur selten abruft, wird die maximale Spraymenge nur sehr selten genutzt werden. Während der restlichen Behandlungszeit hingegen wird erfindungsgemäß eine geringere Menge des Kühlmediums zugeführt. Dies ist insbesondere bei Präzisionsarbeiten von Vorteil, da bei diesen Arbeiten die Abtragsleistung sehr gering ist, erfindungsgemäß dementsprechend deutlich geringere Mengen des Kühlmediums zugeführt werden und damit die Sicht auf die Behandlungsfläche weniger eingeschränkt wird. Als weiterer Vorteil ergibt sich selbstverständlich, dass bei der Verwendung eines Sprays als Kühlmedium gleichzeitig auch der nicht erwünschte Aerosolnebel und die damit verbundenen Nachteile reduziert werden.

Eine Variation der Mengen von Kühlmedien bei zahnärztlichen Behandlungsinstrumenten ist zwar bereits aus der US 2,984,008 bekannt, allerdings wird in diesem US-Patent vorgeschlagen, die Menge des Kühlmediums in Abhängigkeit von der aktuellen Drehzahl eines zahnärztlichen Bohrers zu variieren. Es hat sich indessen gezeigt, dass die Kopplung der Kühlmedium-Menge an das ausgeübte Drehmoment bzw. die Abtragsleistung deutlich vorteilhafter ist, da die Drehzahl allein zunächst nichts über die erforderlich Kühlung der Behandlungsstelle aussagt. Das Drehmoment bzw. die Abtragsleistung hingegen läßt unmittelbar darauf zurückschließen, inwiefern eine Wärmeentwicklung an der Behandlungsstelle auftritt und in welchem Umfang dementsprechend eine Kühlung erforderlich ist. Gegenüber dem bekannten Verfahren zur Regulierung des Kühlmediums gewährleistet somit die vorliegende Erfindung, dass auch tatsächlich die aktuell benötigte Kühlung der Behandlungsstelle gewährleistet ist. Ein Absterben der Zahnsubstanz aufgrund einer unzureichenden Kühlung ist dementsprechend ausgeschlossen.

Die Regulierung der Menge des Kühlmediums erfolgt vorzugsweise mittels einer Steuereinrichtung, die entweder in einem zahnärztlichen Behandlungsinstrument selbst oder in einer Versorgungseinheit für das Behandlungsinstrument angeordnet sein kann. Wesentliche Komponenten der Steuereinrichtung sind dabei zunächst Erfassungsmittel zum Ermitteln der Abtragsleistung des Werkzeugs bzw. des von dem Werkzeug ausgeübten Drehmoments, Bestimmungsmittel zum Bestimmen einer Sollmenge für das Kühlmedium in Abhängigkeit von den durch die Erfassungsmittel übermittelten Informationen sowie Steuer- und/oder Regelungsmittel zum Einstellen der Menge des ausgegebenen Kühlmediums in Abhängigkeit von der bestimmten Sollmenge.

Die vorliegende Erfindung kann unabhängig von der Art des Antriebs für das zahnärztliche Werkzeug genutzt werden. So kann die Erfindung beispielsweise bei elektrischen Antriebsmotoren, Luftturbinen oder Luftmotoren zum Einsatz kommen, wobei sich die Ausgestaltung der Steuereinrichtung dann im wesentlichen im Hinblick auf die Erfassungsmittel zum Ermitteln der Abtragsleistung bzw. des Drehmoments unterscheidet.

Wird beispielsweise ein Elektromotor zum Antriebs des Bohrers genutzt, so kann das Drehmoment über den Motorstrom und die Leistung insgesamt über eine zusätzliche Erfassung der Motorspannung ermittelt werden. Für jedes Instrument wird dann einem Leistungswert die jeweilige anhand von wissenschaftlichen Untersuchungen ermittelte Spraymenge zugeordnet und in einem elektronischen Speicher innerhalb der Steuereinrichtung als Tabelle hinterlegt. Durch einen Vergleich der ermittelten Abtragsleistung bzw. des Drehmoments mit den verschiedenen Tabellenwerten kann dann ein geeigneter Sollwert für die Kühlmedium-Menge ermittelt werden. Eine hierzu alternative Möglichkeit besteht darin, die Kühlmedium-Menge anhand einer Kennlinie zu berechnen. Diese Kennlinie ist vorzugsweise im wesentlichen linear ausgestaltet, allerdings derart ausgebildet, dass im aktivierten Zustand des Antriebs zumindest eine Mindestmenge von Kühlmedium zugeführt wird.

Zum letztendlichen Einstellen der Menge des Kühlmediums sind ebenfalls mehrere Möglichkeiten denkbar. Gemäß einer ersten Variante ist innerhalb einer Zuführleitung für das Kühlmedium eine sogenannte Ventilinsel mit mehreren unterschiedlichen Ventilen angeordnet, wobei die Steuereinrichtung dasjenige Ventil öffnet, dessen Durchlaß der gewünschten Kühlleistung entspricht. Bei einer zweiten Variante hingegen ist innerhalb der Zuführleitung für das Kühlmedium ein Proportionalventil angeordnet, das von den Steuer- und/oder Regelungsmitteln anhand eines Vergleichs der aktuellen Durchlaßmenge mit dem von den Bestimmungsmitteln vorgegebenen Sollwert angesteuert wird. Hierfür ist innerhalb der Zuführungsleitung noch ein weiterer Sensor zum Erfassen des Kühlmedium-Durchflusses angeordnet. Diese zweite Variante ist hinsichtlich der Einstellung der Menge des Kühlmediums etwas aufwendiger, gewährleistet dafür allerdings eine genauere Regelung der Menge des Kühlmediums.

Wird anstelle eines Elektromotors eine Luftturbine oder ein Luftmotor als Antriebseinheit verwendet, so unterscheidet sich die Ausgestaltung der Steuereinrichtung in erster Linie im Hinblick auf die Ermittlung der Abtragsleistung bzw. des Drehmoments. Hierbei besteht insbesondere die Möglichkeit, Sensoren zu nutzen, die den Druckunterschied zwischen Antriebs- und Rückluft erfassen, wobei der Druckunterschied, der gleich der aktuellen Leistung ist, dann in einer elektronischen Auswerteeinheit ermittelt werden kann. Ferner können Sensoren zur Ermittlung der Drehzahl innerhalb des Instruments angeordnet werden.

Bei dem zur Verfügung gestellten Kühlmedium kann es sich beispielsweise um Luft, Wasser oder um eine Mischung in Form eines Sprays handeln. Für den Fall, dass ein Wasser-Luft-Spray als Kühlmedium eingesetzt wird, kann zur Regulierung der Kühlleistung ausschließlich die Menge des Wassers in der oben beschriebenen Weise eingestellt werden. Es bestünde allerdings auch die Möglichkeit, sowohl die Luft- als auch die Wasser-Menge getrennt voneinander einzustellen, um somit nochmals besser und genauer die Kühlleistung regulieren zu können.

Nachfolgend soll die Erfindung anhand der beiliegenden Zeichnung näher erläutert werden. Es zeigen:

Fig. 1         ein zahnärztliches Behandlungsinstrument in seitlicher Ansicht;

Fig. 2         ein erstes Ausführungsbeispiel einer erfindungsgemäßen Steuereinrichtung zur Regulierung der Menge des Kühlmediums und

Fig. 3 bis 5   weitere Varianten einer erfindungsgemäß ausgestalteten Steuereinrichtung.

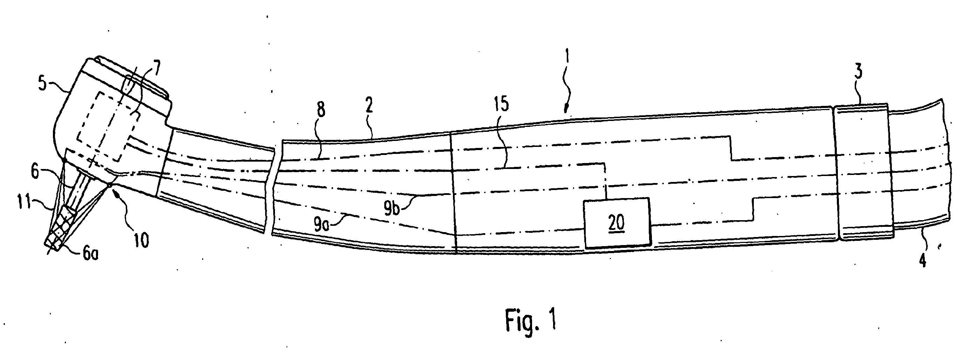

Das in Fig. 1 in seiner Gesamtheit mit dem Bezugszeichen 1 versehene zahnärztliche Behandlungsinstrument besteht zunächst aus einer länglichen Griffhülse 2, die an ihrem hinteren Ende über ein Anschlußteil 3 mit einem Versorgungsschlauch 4 verbunden werden kann. Der Versorgungsschlauch 4 führt zu einer (nicht dargestellten) Versorgungseinrichtung, welche dem Behandlungsinstrument 1 über den Schlauch 4 die erforderlichen Medien zum Betrieb des Instruments 1 zur Verfügung stellt. Bei diesen zur Verfügung gestellten Medien handelt es sich insbesondere um Strom, der beispielsweise zum Antrieb eines Werkzeugs oder zur Versorgung einer Beleuchtungseinrichtung genutzt werden kann, sowie um Medien zur Kühlung der Behandlungsstelle, wie z. B. Luft und/oder Wasser.

Im dargestellten Ausführungsbeispiel wird als Antriebseinheit zum Antreiben eines zahnärztlichen Bohrers 6, der im Kopfbereich 5 des Behandlungsinstruments 1 angeordnet ist, eine Luftturbine 7 verwendet. Als Antriebsmedium hierfür ist dementsprechend Druckluft erforderlich, die ebenfalls über den Versorgungsschlauch 4 zugeführt und mittels einer Versorgungsleitung 8, die sich in Längsrichtung durch die Griffhülse 2 des Behandlungsinstruments 1 erstreckt, zur Turbine 7 geführt wird.

Der von der Turbine 7 angetriebene Bohrer 6 ist an seinem unteren Bereich mit einem Bohrkopf 6a versehen, der aufgrund seiner abrasiven Eigenschaften zum Abtragen von Zahnmaterial geeignet ist. Da an der Behandlungsstelle Wärme entsteht, sobald der sich drehende Bohrer 6 in Kontakt mit dem Zahnmaterial gelangt, ist eine Kühlung der Behandlungsstelle erforderlich. Im dargestellten Ausführungsbeispiel erfolgt dies mit Hilfe eines Spraynebels 11, der über im Kopfbereich 5 des Behandlungsinstruments 1 angeordnete Düsen 10 austritt und auf den Bohrkopf 6a des Bohrers 6 gerichtet ist. Wird nun der Bohrer 6 in Betrieb genommen, so wird gleichzeitig auch der Spraynebel 11 auf die Behandlungsstelle gerichtet, so dass diese gekühlt wird.

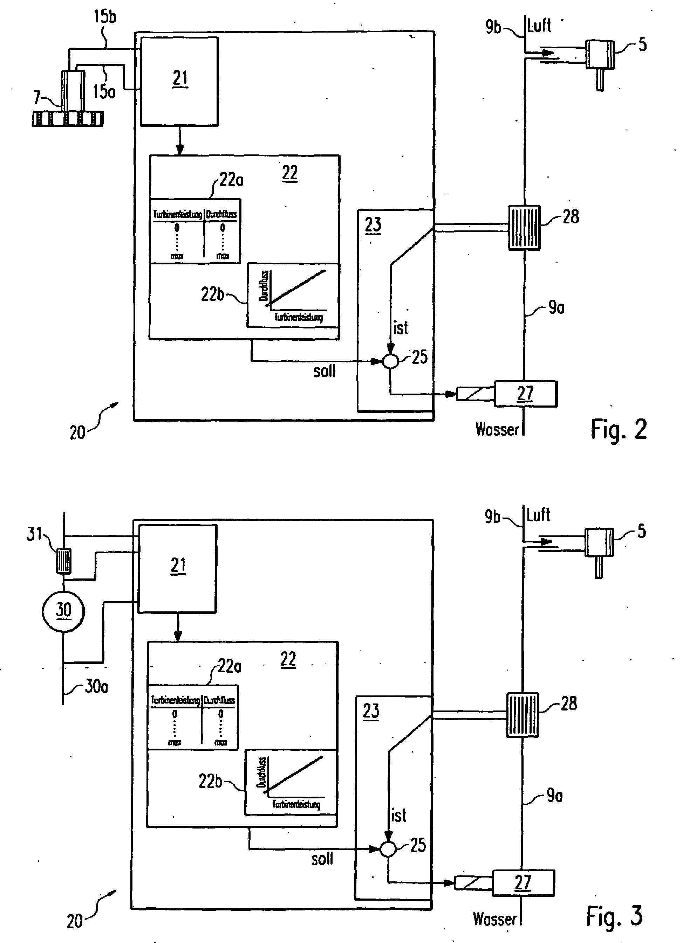

Die Medien zu Erzeugung des Spraynebels, insbesondere also Luft und Wasser werden über weitere Versorgungsleitungen 9a und 9b zugeführt, die ebenfalls mit dem Versorgungsschlauch 4 verbunden sind und sich in Längsrichtung durch die Griffhülse 2 des Instruments 1 erstrecken. Gemäß der vorliegenden Erfindung ist nunmehr allerdings vorgesehen, dass die Menge des abgegebenen Sprays von der Abtragsleistung des Bohrers 6 bzw. von dem von dem Bohrer 6 ausgeübten Drehmoment abhängig ist. Hierzu ist innerhalb der Versorgungsleitung 9a für das zur Erzeugung des Spraynebels verwendete Wasser eine Steuereinrichtung 20 angeordnet, welche über eine oder mehrere Verbindungsleitungen 15 Informationen hinsichtlich der aktuellen Abtragsleistung bzw. des Drehmoments erhält und dementsprechend die Menge des dem Kopfbereich 5 zugeführten Wassers steuert. Die Funktionsweise dieser erfindungsgemäßen Steuereinrichtung 20 soll nachfolgend anhand von Fig. 2 erläutert werden.

Wesentliche Bestandteile der Steuereinrichtung 20 sind zum einen Erfassungsmittel 21 zum Erfassen aktueller Informationen über die Antriebseinheit des Behandlungsinstruments, Bestimmungsmittel 22 zum Bestimmen einer Sollmenge für das Kühlmedium, die bei der aktuellen Abtriebsleistung bzw. dem aktuellen Drehmoment zur Bereitstellung einer ausreichenden Kühlung erforderlich ist, und Steuer- und/oder Regelungsmittel 23 zum Einstellen der Menge des ausgegebenen Kühlmediums.

Bevor die genaue Funktionsweise aller drei Komponenten der Steuereinrichtung 20 näher erläutert wird, ist noch anzumerken, dass im dargestellten Ausführungsbeispiel vorausgesetzt ist, dass als Kühlmedium ein Wasser-Luft-Gemisch in Form eines Sprays bereitgestellt wird, wobei das Wasser und die Luft über zwei getrennte Versorgungsleitungen 9a bzw. 9b zugeführt und - wie schematisch dargestellt - erst im Kopfbereich 5 des Behandlungsinstruments zu dem gewünschten Spray vermischt werden. Die Regulierung der Menge des Kühlmediums erfolgt im dargestellten Ausführungsbeispiel ausschließlich dadurch, dass die Menge des zugeführten Wassers verändert wird. Dies ist für eine Steuerung der Kühlleistung ausreichend, da in erster Linie das Wasser für die Kühlung verantwortlich ist. Es wäre allerdings auch denkbar, zusätzlich neben der Wassermenge auch die Luftmenge in Abhängigkeit von dem erfaßten Drehmoment bzw. der Abtragsleistung einzustellen.

Bei dem in Fig. 2 dargestellten Ausführungsbeispiel ist als Antriebseinheit die auch in Fig. 1 dargestellte Luftturbine 7 vorgesehen, die über zwei Verbindungsleitungen 15a bzw. 15b mit der Steuereinrichtung 20 verbunden ist. Genauer gesagt, sind innerhalb der Turbine 7 zwei Sensoren vorgesehen, mittels denen das Drehmoment der Turbine 7 sowie ihre Drehzahl ermittelt wird. Beide Meßwerte werden dann über die Leitungen 15a, b den Erfassungsmitteln 21 innerhalb der Steuereinrichtung 22 zugeführt, die dann die aktuelle Abtragsleistung der Turbine 7 in folgender Weise berechnet:

$$P_{Turbine} = Md \cdot n \cdot 2\pi$$

wobei $P_{Turbine}$ der Turbinenleistung, Md dem Drehmoment und n der Drehzahl entspricht. Die Information hinsichtlich der aktuellen Abtragsleistung der Turbine 7 wird dann den Bestimmungsmitteln 22 zugeführt, welche die erforderliche Kühlleistung bestimmen und einen entsprechenden Sollwert für die Wassermenge an die Steuer- und/oder Regelungsmittel 23 übermitteln.

Die Bestimmung des Sollwerts für die Wassermenge kann auf zwei Arten erfolgen, die beide schematisch in Fig. 2 dargestellt sind. Bei einem ersten Ausführungsbeispiel ist innerhalb eines elektronischen Speichers 22a der Bestimmungsmittel 22 eine Tabelle abgelegt, in der verschiedene Turbinenleistungswerte mit verschiedenen Durchlaßmengen verknüpft sind. Durch einen Vergleich der aktuell bestimmten Turbinenleistung mit den verschiedenen Tabellenwerten kann dann ein geeigneter Sollwert ermittelt werden. Die in der Tabelle enthaltenen Informationen wurden zuvor anhand von Untersuchungen ermittelt, wobei hierbei auch die Art des Instruments bzw. die Beschaffenheit des Bohrers berücksichtigt wird.

Eine zweite Möglichkeit zur Bestimmung des Sollwerts für die Wassermenge besteht in einer Berechnung dieser anhand der ermittelten Turbinenleistung, wobei hierzu eine schematisch mit dem Bezugszeichen 22b dargestellte Kennlinie herangezogen wird. In einer einfachen Variante ist diese Kennlinie linear ausgestaltet, so dass also mit steigender Turbinenleistung linear auch die zur Verfügung gestellte Wassermenge ansteigt. Dabei ist die Kennlinie allerdings derart gewählt, dass grundsätzlich bei aktiviertem Antrieb eine gewisse Mindestmenge an Wasser zur Verfügung gestellt wird. Somit ist sichergestellt, dass auch bei kleinen Abtragsleistungen zumindest eine gewisse Basiskühlung der Behandlungsstelle erfolgt. Diese Basiskühlung kann selbstverständlich auch bei der Bestimmung der erforderlichen Wassermenge mittels der Tabelle 22a vorgesehen sein. Anstelle der linearen Ausgestaltung könnte die Kennlinie 22b auch durch eine Polynomfunktion gebildet werden.

Der in der oben beschriebenen Weise ermittelte Sollwert für die Wassermenge wird dann den Steuer- und/oder Regelungsmitteln 23 zugeführt, welche in geeigneter Weise die Regulierung der Wassermenge vornehmen. Bei dem in Fig. 2 dargestellten Ausführungsbeispiel ist hierzu innerhalb der Zuführungsleitung 9a für das Wasser ein Proportionalventil 27 angeordnet, welches durch ein Steuersignal der Steuereinrichtung 22 variabel angesteuert wird, um die Wassermenge einzustellen. Um eine möglichst genaue Regelung auf die gewünschte Durchflußmenge zu ermöglichen, ist ferner stromabwärts von dem Proportionalventil 27 innerhalb der Zuführungsleitung 9a noch ein weiterer Sensor 28 vorgesehen, der den Wasserdurchfluß mittels einer Bestimmung des Differenzdrucks erfaßt. Der hierbei ermittelte Istwert wird dann einer Regeleinrichtung 25 innerhalb der Steuer- und/oder Regelungsmitteln 23 zugeführt, welche dann anhand eines Vergleichs des Istwerts mit dem Sollwert das Proportionalventil 27 ansteuert. Auf diese Weise ist sichergestellt, dass die zur Verfügung gestellte Wassermenge genau dem von den Bestimmungsmitteln 22 bestimmten Wert entspricht. Diese Wassermenge wird dann mit der über die Versorgungsleitung 9b zur Verfügung gestellten Luft vermischt, um das Spray zur Kühlung zu bilden.

Die Kühlleistung wird in der oben beschriebenen Weise also quasi in Echtzeit an die aktuellen Betriebsbedingungen angepaßt. Vorzugsweise ist allerdings vorgesehen, dass diese automatische Anpassung der Kühlleistung auch zumindest vorübergehend deaktivierbar ist und dann die Kühlmittelmenge durch den Benutzer manuell eingestellt werden kann. Im Falle einer Störung kann somit der Benutzer noch immer manuell sicherstellen, dass eine ausreichende Kühlung erfolgt.

Bei dem in Fig. 3 dargestellten Ausführungsbeispiel ist als Antriebseinheit anstelle der Turbine ein Luftmotor 30 vorgesehen, dessen Leistung bzw. Drehmoment wiederum überwacht und dann in eine geeignete Menge an Kühlmedium umgesetzt wird. Zur Bestimmung der Leistung des Luftmotors 30 ist zunächst innerhalb der Druckluftleitung 30a ein Sensor vorgesehen, der den aktuellen Druck p ermittelt. Mittels eines weiteren Differenzdruck-Sensors 31, der dem Luftmotor 30 nachgeordnet ist, kann dann darüber hinaus auch die Durchflußmenge Vpkt ermittelt werden, wobei sich die Leistung des Luftmotors $P_{Motor}$ wie folgt berechnet:

$$P_{Motor} = p \cdot Vpkt$$

Die auf diese Weise von den Erfassungsmitteln 21 ermittelte Leistung wird dann wiederum den Bestimmungsmitteln 22 zugeführt, die analog zur der zuvor beschriebenen Vorgehensweise einen Sollwert für die erforderliche Wassermenge bestimmen. Wiederum kann der Sollwert entweder anhand eines Vergleichs mit Tabellenwerten oder über die Berechnung im Rahmen einer Kennlinie erfolgen. Auch die Regulierung der Wassermenge erfolgt in der zuvor beschriebenen Weise, d.h. es wird ein Proportionalventil 27 eingesetzt, das im Rahmen einer Regelschleife angesteuert wird.

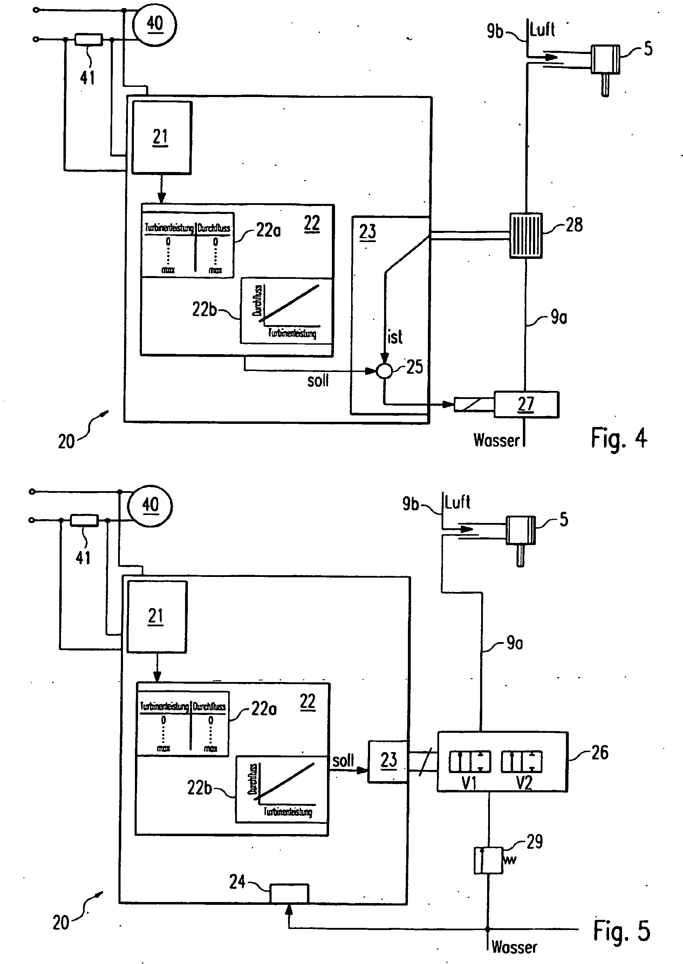

Das in Fig. 4 dargestellte Ausführungsbeispiel unterscheidet sich gegenüber den beiden Ausführungsbeispielen der Fig. 2 und 3 darin, dass als Antriebseinheit ein Elektromotor 40 verwendet wird. Um die Motorleistung des Elektromotors 40 zu bestimmen, wird nunmehr zunächst der Motorstrom $I_{Motor}$ gemessen, was durch die Bestimmung des Spannungsabfalls über einen Referenzwiderstand 41 erfolgt. Als weiterer Eingangswert für die Erfassungsmittel 21 wird noch die Motorspannung $U_{Motor}$ bestimmt, so dass dann die Motorleistung $P_{Motor}$ in bekannter Weise wie folgt berechnet wird:

$$P_{Motor} = U_{Motor} \cdot I_{Motor}$$

Analog zu den Ausführungsbeispielen der Fig. 2 und 3 erfolgt dann wiederum eine Bestimmung eines geeigneten Sollwerts sowie Regelung des Proportionalventils 27 zur Bereitstellung einer geeigneten Wassermenge.

Das letzte Ausführungsbeispiel in Fig. 5 entspricht im wesentlichen dem Ausführungsbeispiel von Fig. 4, bei dem ein Elektromotor 40 als Antriebseinheit eingesetzt wurde. Unterschiede ergeben sich allerdings im Hinblick auf die Regulierung der Wassermenge. Anstelle der Verwendung eines Proportionalventils mit gleichzeitiger Regelschleife ist nunmehr eine Ventilinsel 26 vorgesehen, die mehrere Ventile aufweist, die sich hinsichtlich ihrer Durchlaßmenge V1, V2... unterscheiden. Je nach Höhe des Sollwertes, der von den Bestimmungsmitteln 22 ausgegeben wurde, steuern dann die Steuer- und/oder Regelungsmittel die Ventilinsel 26 derart an, dass ein Ventil mit einer geeigneten Durchlaßmenge aktiviert wird. Ein der Ventilinsel 26 vorgeschalteter Druckbegrenzer 27 verhindert, dass ein zu hoher Druck an die Ventilinsel 26 gelangt, ferner ist eine Drucküberwachungseinrichtung 24 innerhalb der Steuereinrichtung 20 vorgesehen, um ein Betreiben des Geräts bei mangelhaftem Wasserdruck zu vermeiden. Diese Steuerung der zur Verfügung gestellten Wassermenge mittels der Ventilinsel 26 könnte selbstverständlich auch bei den Ausführungsbeispielen mit der Turbine oder dem Luftmotor als Antriebseinheit eingesetzt werden.

Insgesamt eröffnet somit die vorliegende Erfindung die Möglichkeit, die Menge des zur Verfügung gestellten Kühlmediums und damit die Kühlleistung an die Abtragsleistung anzupassen. Anzumerken ist, dass anstelle der Anpassung an die Abtragsleistung auch denkbar wäre, ausschließlich das ausgeübte Drehmoment für die Steuerung der Kühlleistung heranzuziehen. Da das Drehmoment hinsichtlich seiner Auswirkungen auf die Wärmeentwicklung an der Behandlungsstelle große Ähnlichkeiten mit der Abtragsleistung aufweist, kann auch in diesem Fall eine geeignete Anpassung der Kühlleistung erfolgen.

Ferner ist anzumerken, dass alternativ zu den dargestellten Ausführungsbeispielen, in denen die Steuereinrichtungen zur Regulierung der Kühlleistung jeweils in dem Behandlungsinstrument angeordnet waren, auch vorgesehen sein könnte, die Steuereinrichtung in einer Versorgungseinrichtung für das Behandlungsinstrument anzuordnen. In diesem Fall wird dann vorgesehen sein, dass auch unterschiedliche Behandlungsinstrumente mit der Versorgungseinrichtung verbunden werden können. Da hierbei auch unterschiedliche Kühlleistungen erforderlich sein werden, ist dann vorzugsweise für jedes Instrument eine entsprechende Tabelle mit Sollwerten für die erforderliche Kühlleistung in Abhängigkeit von der aktuellen Abtragsleistung vorgesehen. Ein Benutzer der Vorrichtung übermittelt der Versorgungseinrichtung dann manuell die Information, welches Instrument gerade benutzt wird und welche Sollwert-Tabelle oder Kennlinie zu verwenden ist. Selbstverständlich wäre allerdings auch denkbar, dass die Versorgungseinrichtung das gerade angeschlossene Instrument über eine Codierung selbständig erkennt und automatisch die geeignete Tabelle oder eine alternativ dazu nutzbare Kennlinie heranzieht.

In jedem Fall wird erreicht, dass die Kühlleistung in geeigneter Weise eingestellt wird, so dass einerseits für einen Benutzer des Behandlungsinstruments optimale Arbeitsbedingungen herrschen und andererseits eine Schädigung des bearbeiteten Zahns aufgrund einer überhöhten Wärmeentwicklung vermieden werden.

**Patentansprüche**

1. Behandlungsvorrichtung, insbesondere zahnärztliches Behandlungsinstrument (1), mit einem von einer Antriebseinheit (7, 30, 40) angetriebenen Werkzeug (6), insbesondere einem zahnärztlichen Bohrer, sowie Mitteln zum Zuführen eines Kühlmediums zu einer von dem Werkzeug (6) bearbeiteten Behandlungsstelle,
   **dadurch gekennzeichnet,**
   **dass** die Behandlungsvorrichtung ferner eine Steuereinrichtung (20) zur Ermittlung der Abtragsleistung des Werkzeugs (6) bzw. des von dem Werkzeug (6) ausgeübten Drehmoments sowie zur Regelung der Menge des Kühlmediums aufweist,
   wobei die Menge des der Behandlungsstelle zugeführten Kühlmediums von der Abtragsleistung des Werkzeugs (6) oder dem von dem Werkzeug (6) ausgeübten Drehmoment abhängig ist.

2. Behandlungsvorrichtung nach Anspruch 1,
   **dadurch gekennzeichnet,**
   **dass** die Steuereinrichtung (20)

   • Erfassungsmittel (21) zum Ermitteln der Abtragsleistung des Werkzeugs (6) bzw. des von dem Werkzeug (6) ausgeübten Drehmoments,
   • Bestimmungsmittel (22) zum Bestimmen einer Sollmenge für das Kühlmedium in Abhängigkeit von den von den Erfassungsmitteln (21) ausgegebenen Informationen, sowie
   • Steuer- und/oder Regelungsmittel (23) zum Einstellen der Menge des ausgegebenen Kühlmediums in Abhängigkeit von der bestimmten Sollmenge aufweist.

3. Behandlungsvorrichtung nach Anspruch 2,
   **dadurch gekennzeichnet,**
   **dass** die Antriebseinheit durch einen Elektromotor (40) gebildet ist,
   wobei die Erfassungsmittel (21) zum Ermitteln des von dem Werkzeug (6) ausgeübten Drehmoments den Motorstrom ($I_{motor}$) erfassen.

4. Behandlungsvorrichtung nach Anspruch 3,
   **dadurch gekennzeichnet,**
   **dass** die Erfassungsmittel (21) zusätzlich auch die Motorspannung ($U_{motor}$) erfassen und aus dem Motorstrom ($I_{motor}$) und der Motorspannung ($U_{motor}$) die Abtragsleistung des Werkzeugs (6) ermitteln.

5. Behandlungsvorrichtung nach Anspruch 2,
   **dadurch gekennzeichnet,**
   **dass** es sich bei der Antriebseinheit um eine Luftturbine (7) handelt.

6. Behandlungsvorrichtung nach Anspruch 5,
   **dadurch gekennzeichnet,**

**dass** die Erfassungsmittel (21) das Drehmoment (Md) sowie die Drehzahl (n) der Turbine (7) erfassen und daraus die Abtragsleistung des Werkzeugs (6) bestimmt.

7. Behandlungsvorrichtung nach Anspruch 2,
**dadurch gekennzeichnet,**
**dass** es sich bei der Antriebseinheit um einen Luftmotor (30) handelt.

8. Behandlungsvorrichtung nach Anspruch 7,
**dadurch gekennzeichnet,**
**dass** die Erfassungsmittel Sensoren zum Erfassen des Unterschieds zwischen dem Druck einer Antriebsluft für den Luftmotor (30) und dem Druck der von dem Motor (30) abgeführten Rückluft aufweisen.

9. Behandlungsvorrichtung nach einem der Ansprüche 2 bis 8,
**dadurch gekennzeichnet,**
**dass** die Bestimmungsmittel (22) den Sollwert für die Menge des Kühlmediums durch einen Vergleich der von den Erfassungsmitteln (21) ermittelten Abtragsleistung bzw. des Drehmoments mit vorgegebenen Werten einer Sollwert-Tabelle (22a) bestimmen.

10. Behandlungsvorrichtung nach einem der Ansprüche 2 bis 8,
**dadurch gekennzeichnet,**
**dass** die Bestimmungsmittel (22) den Sollwert für die Menge des Kühlmediums entsprechend einer Kennlinie (22b) berechnen.

11. Behandlungsvorrichtung nach Anspruch 10,
**dadurch gekennzeichnet,**
**dass** die Kennlinie (22b) im Wesentlichen linear verläuft.

12. Behandlungsvorrichtung nach einem der Ansprüche 9 bis 11,
**dadurch gekennzeichnet,**
**dass** im aktivierten Zustand der Antriebseinheit (7, 30, 40) grundsätzlich eine Mindestmenge an Kühlmediums zugeführt wird.

13. Behandlungsvorrichtung nach einem der Ansprüche 2 bis 8,
**dadurch gekennzeichnet,**
**dass** es sich bei dem Kühlmedium um ein Fluid, insbesondere um Luft, Wasser oder eine Mischung von Luft und Wasser handelt.

14. Behandlungsvorrichtung nach Anspruch 13,
**dadurch gekennzeichnet,**
**dass** die Steuer- und/oder Regelungsmittel (23) auf Basis des von den Bestimmungsmitteln (22) bestimmten Sollwerts eine in einer Zuführungsleitung (9a) für das Kühlmedium befindliche Ventileinheit (26, 27) ansteuern.

15. Behandlungsvorrichtung nach Anspruch 14,
**dadurch gekennzeichnet,**
**dass** es sich bei der Ventileinheit um eine Einrichtung mit mehreren parallel geschalteten Ventilen handelt, wobei die Steuer- und/oder Regelungsmittel (23) auf Basis des von den Bestimmungsmitteln (22) bestimmten Sollwerts eines der Ventile, dessen Durchlass im Wesentlichen dem Sollwert entspricht, aktivieren.

16. Behandlungsvorrichtung nach Anspruch 14,
**dadurch gekennzeichnet,**
**dass** es sich bei der Ventileinheit um ein Proportionalventil (27) handelt.

17. Behandlungsvorrichtung nach Anspruch 16,
**dadurch gekennzeichnet,**
**dass** in der Zuführungsleitung (9a) für das Kühlmedium ein Sensor (28) zur Ermittlung der Durchflussmenge des Kühlmediums angeordnet ist, wobei die Steuer- und/oder Regelungsmittel (23) das Proportionalventil (27) auf Basis eines Vergleichs zwischen dem Sollwert und der ermittelten Durchflussmenge ansteuern.

18. Behandlungsvorrichtung nach einem der Ansprüche 13 bis 17,
**dadurch gekennzeichnet,**
**dass** es sich bei dem Kühlmedium um ein Spray handelt.

19. Behandlungsvorrichtung nach Anspruch 18,
**dadurch gekennzeichnet,**
**dass** zur Einstellung der Menge des Kühlmediums ausschließlich die Wassermenge verändert wird.

20. Behandlungsvorrichtung nach Anspruch 18,
**dadurch gekennzeichnet,**
**dass** zur Einstellung der Menge des Kühlmediums sowohl die Luftmenge als auch die Wassermenge verändert wird.

21. Behandlungsvorrichtung nach einem der vorherigen Ansprüche,
**dadurch gekennzeichnet,**
**dass** Steuereinrichtung (20) in ein Behandlungsinstrument (1) integriert ist, welches die Antriebseinheit (7, 30, 40) sowie das Behandlungswerkzeug (6) aufweist.

22. Behandlungsvorrichtung nach einem der vorherigen Ansprüche,
**dadurch gekennzeichnet,**
**dass** Steuereinrichtung (20) in einer Versorgungseinheit für ein Behandlungsinstrument (1) angeordnet ist.

23. Behandlungsvorrichtung nach Anspruch 22,
**dadurch gekennzeichnet,**
**dass** die Versorgungseinheit mir unterschiedlichen Behandlungsinstrumenten (1) mit verschiedenen Antriebseinheiten und/oder Werkzeugen verbindbar ist.

24. Behandlungsvorrichtung nach Anspruch 23,
**dadurch gekennzeichnet,**
**dass** die Venorgungseinheit das angeschlossene Behandlungsinstrument (1) automatisch erkennt.

25. Behandlungsvorrichtung nach einem der vorherigen Ansprüche,
**dadurch gekennzeichnet,**
**dass** die Einstellung der Menge des Kühlmediums in Abhängigkeit von der Abtragsleistung des Werkzeugs oder dem von dem Werkzeug ausgeübten Drehmoment zumindest vorübergehend deaktivierbar ist.

26. Verfahren zum Betreiben einer Behandlungsvorrichtung, insbesondere eines zahnärztlichen Behandlungsinstruments (1), wobei einer mit einem Werkzeug (6), beispielsweise einem zahnärztliche Bohrer bearbeiteten Behandlungsstelle ein Kühlmedium zugeführt wird,
**dadurch gekennzeichnet,**
**dass** die Abtragsleistung des Werkzeugs bzw. des von dem Werkzeug ausgeübten Drehmoments ermittelt wird, und
**dass** die Menge des der Behandlungutelle zugeführten Kühlmediums in Abhängigkeit von der Abtragsleistung des Werkzeugs (6) oder dem von dem Werkzeug (6) ausgeübten Drehmoment geregelt wird.

**Claims**

1. A treatment device, in particular a dental treatment instrument (1), having a tool (6), in particular a dental drill, driven by a drive unit (7, 30, 40) and also means for delivering a cooling medium to a treatment site worked by the tool (6),
**characterized in that**
the treatment device has, furthermore, a control device (20) for ascertaining the removal power of the tool (6) or the torque exerted by the tool (6) and also for regulating the quantity of the cooling medium, the quantity of the cooling medium delivered to the treatment site being dependent upon the removal power of the tool (6) or upon the torque exerted by the tool (6).

2. A treatment device according to claim 1,
**characterized in that**
the control device (20) has

   • detection means (21) for ascertaining the removal power of the tool (6) or the torque exerted by the tool (6),
   • determination means (22) for determining a desired quantity for the cooling medium in dependence upon the information issued by the detection means (21), and also
   • control and/or regulation means (23) for setting the quantity of the cooling medium issued in dependence upon the determined desired quantity.

3. A treatment device according to claim 2,
**characterized in that**
the drive unit is formed by means of an electric motor (40),
wherein the detection means (21) for ascertaining the torque exerted by the tool (6) detect the motor current ($I_{motor}$).

4. A treatment device according to claim 3,
**characterized in that**
the detection means (21) additionally also detect the motor voltage ($U_{motor}$) and ascertain the removal power of the tool (6) from the motor current ($I_{motor}$) and the motor voltage ($U_{motor}$).

5. A treatment device according to claim 2,
**characterized in that**
the drive unit is an air turbine (7).

6. A treatment device according to claim 5,
**characterized in that**
the detection means (21) detect the torque (Md) and also the rotational speed (n) of the turbine (7), and therefrom determine the removal power of the tool (6).

7. A treatment device according to claim 2,
**characterized in that**
the drive unit is an air motor (30).

8. A treatment device according to claim 7,
**characterized in that**
the detection means have sensors for detecting the difference between the pressure of drive air for the air motor (30) and the pressure of the return air exhausted from the motor (30).

9. A treatment device according to one of claims 2 to 8,
**characterized in that**
the determination means (22) determine the desired value for the quantity of the cooling medium by means of a comparison of the removal power or of the torque ascertained by the detection means (21) with predetermined values of a desired-value table (22a).

**10.** A treatment device according to one of claims 2 to 8, **characterized in that** the determination means (22) calculate the desired value for the quantity of the cooling medium in accordance with a characteristic line (22b).

**11.** A treatment device according to claim 10, **characterized in that** the characteristic line (22b) in substance develops linearly.

**12.** A treatment device according to one of claims 9 to 11, **characterized in that** in the activated condition of the drive unit (7, 30, 40) a minimum quantity of cooling medium is fundamentally delivered.

**13.** A treatment device according to one of claims 2 to 8, **characterized in that** the cooling medium is a fluid, in particular air, water or a mixture of air and water.

**14.** A treatment device according to claim 13, **characterized in that** the control and/or regulation means (23) control a valve unit (26, 27), located in a delivery line (9a) for the cooling medium, on the basis of the desired value determined by the determination means (22).

**15.** A treatment device according to claim 14, **characterized in that** the valve unit is a device with a plurality of valves connected in parallel, with the control and/or regulation means (23), on the basis of the desired value determined by the determination means (22), activating one of the valves whose throughput corresponds in substance to the desired value.

**16.** A treatment device according to claim 14, **characterized in that** the valve unit is a proportional valve (27).

**17.** A treatment device according to claim 16, **characterized in that** arranged in the delivery line (9a) for the cooling medium there is a sensor (28) for ascertaining the throughflow quantity of the cooling medium, the control and/or regulation means (23) controlling the proportional valve (27) on the basis of a comparison between the desired value and the throughflow quantity that is ascertained.

**18.** A treatment device according to one of claims 13 to 17, **characterized in that**

the cooling medium is a spray.

**19.** A treatment device according to claim 18, **characterized in that** in order to set the quantity of the cooling medium solely the water quantity is altered.

**20.** A treatment device according to claim 18, **characterized in that** in order to set the quantity of the cooling medium both the air quantity and the water quantity are altered.

**21.** A treatment device according to one of the preceding claims, **characterized in that** the control device (20) is integrated in a treatment instrument (1) which has the drive unit (7, 30, 40) and also the treatment tool (6).

**22.** A treatment device according to one of the preceding claims, **characterized in that** the control device (20) is arranged in a supply unit for a treatment instrument (1).

**23.** A treatment device according to claim 22, **characterized in that** the supply unit can be connected with different treatment instruments (1) having various drive units and/or tools.

**24.** A treatment device according to claim 23, **characterized in that** the supply unit automatically recognizes the treatment instrument (1) that is connected.

**25.** A treatment device according to one of the preceding claims, **characterized in that** the setting of the quantity of the cooling medium in dependence upon the removal power of the tool or the torque exerted by the tool can be deactivated at least temporarily.

**26.** Method of operating a treatment device, in particular a dental treatment instrument (1), wherein cooling medium is delivered to a treatment site worked with a tool (6), for example a dental drill, **characterized in that** the removal power of the tool or the torque exerted by the tool is ascertained, and **in that** the quantity of the cooling medium delivered to the treatment site is regulated in dependence upon the removal power of the tool (6) or upon the torque exerted by the tool (6).

**Revendications**

1. Dispositif de traitement, en particulier instrument de soins dentaires (1) avec un outil (6) entraîné par une unité d'entraînement (7, 30, 40), en particulier une fraise dentaire, ainsi que des moyens de conduction d'un milieu de refroidissement vers un point de traitement soigné par l'outil (6), **caractérisé en ce que** le dispositif de traitement comporte en outre un système de commande (20) pour la détermination du débit d'enlèvement de l'outil (6) ou du couple appliqué par l'outil (6), et pour la régulation du débit du milieu de refroidissement, ledit débit de milieu de refroidissement conduit vers le point de traitement étant fonction du débit d'enlèvement de l'outil (6) ou du couple appliqué par l'outil (6).

2. Dispositif de traitement selon la revendication 1, **caractérisé en ce que** le système de commande (20) comporte

   • des moyens de saisie (21) pour la détermination du débit d'enlèvement de l'outil (6) ou du couple appliqué par l'outil (6),
   • des moyens de définition (22) pour la définition d'un débit de consigne pour le milieu de refroidissement en fonction des informations sorties par les moyens de saisie (21), et
   • des moyens de commande et/ou de régulation (23) pour le réglage de débit du milieu de refroidissement en fonction du débit de consigne défini.

3. Dispositif de traitement selon la revendication 2, **caractérisé en ce que** l'unité d'entraînement est formée par un moteur électrique (40), les moyens de saisie (21) pour la détermination du couple appliqué par l'outil (6) saisissant le courant de moteur ($I_{motor}$).

4. Dispositif de traitement selon la revendication 3, **caractérisé en ce que** les moyens de saisie (21) saisissent en outre la tension de moteur ($U_{motor}$) et déterminent le débit d'enlèvement de l'outil (6) à partir du courant de moteur ($I_{motor}$) et de la tension de moteur ($U_{motor}$).

5. Dispositif de traitement selon la revendication 2, **caractérisé en ce que** l'unité d'entraînement est une turbine à air (7).

6. Dispositif de traitement selon la revendication 5, **caractérisé en ce que** les moyens de saisie (21) saisissent le couple (Md) et la vitesse de la turbine (7), le débit d'enlèvement de l'outil (6) étant défini sur cette base.

7. Dispositif de traitement selon la revendication 2, **caractérisé en ce que** l'unité d'entraînement est un moteur à air (30).

8. Dispositif de traitement selon la revendication 7, **caractérisé en ce que** les moyens de saisie comportent des capteurs pour la saisie du différentiel de pression entre l'air d'entraînement pour le moteur à air (30) et l'air de retour évacué du moteur (30).

9. Dispositif de traitement selon l'une des revendications 2 à 8, **caractérisé en ce que** les moyens de définition (22) définissent la valeur de consigne pour le débit du milieu de refroidissement par comparaison entre le débit d'enlèvement déterminé par les moyens de saisie (21) ou le couple et les valeurs prescrites par un tableau de consigne (22a).

10. Dispositif de traitement selon l'une des revendications 2 à 8, **caractérisé en ce que** les moyens de définition (22) calculent la valeur de consigne pour le débit du milieu de refroidissement en fonction d'une courbe caractéristique (22b).

11. Dispositif de traitement selon la revendication 10, **caractérisé en ce que** la courbe caractéristique (22b) est sensiblement linéaire.

12. Dispositif de traitement selon l'une des revendications 9 à 11, **caractérisé en ce qu'**en état d'activation de l'unité d'entraînement (7, 30, 40), un débit minimum de milieu de refroidissement est généralement conduit.

13. Dispositif de traitement selon l'une des revendications 2 à 8, **caractérisé en ce que** le milieu de refroidissement est un fluide, en particulier de l'air, de l'eau ou un mélange d'air et d'eau.

14. Dispositif de traitement selon la revendication 13, **caractérisé en ce que**, sur la base de la valeur de consigne définie par les moyens de définition (22), les moyens de commande et/ou de régulation (23) commandent une unité à vannes (26, 27) disposée dans une conduite d'amenée (9a) pour le milieu de refroidissement.

**15.** Dispositif de traitement selon la revendication 14, **caractérisé**

**en ce que** l'unité à vannes est un dispositif avec plusieurs vannes montées en parallèle, les moyens de commande et/ou de régulation (23) activant une des vannes sur la base de la valeur de consigne définie par les moyens de définition (22), le débit de passage de ladite vanne correspondant sensiblement à la valeur de consigne.

**16.** Dispositif de traitement selon la revendication 14, **caractérisé**

**en ce que** l'unité à vannes est une vanne proportionnelle (27).

**17.** Dispositif de traitement selon la revendication 16, **caractérisé**

**en ce qu'**un capteur (28) pour la détermination du débit de passage du milieu de refroidissement est disposé dans la conduite d'amenée (9a) pour le milieu de refroidissement, les moyens de commande et/ou de régulation (23) commandant la vanne proportionnelle (27) sur la base d'une comparaison entre la valeur de consigne et le débit de passage déterminé.

**18.** Dispositif de traitement selon l'une des revendications 13 à 17, **caractérisé**

**en ce que** le milieu de refroidissement est un aérosol.

**19.** Dispositif de traitement selon la revendication 18, **caractérisé**

**en ce que**, pour régler le débit du milieu de refroidissement, seul le débit d'eau est varié.

**20.** Dispositif de traitement selon la revendication 18, **caractérisé**

**en ce que**, pour régler le débit du milieu de refroidissement, le débit d'air ainsi que le débit d'eau sont variés.

**21.** Dispositif de traitement selon l'une des revendications précédentes, **caractérisé**

**en ce que** le dispositif de commande (20) est intégré à un instrument de soins (1) comportant l'unité d'entraînement (7, 30, 40) ainsi que l'outil de traitement (6).

**22.** Dispositif de traitement selon l'une des revendications précédentes, **caractérisé**

**en ce que** le dispositif de commande (20) est disposé dans une unité d'alimentation pour un instrument de soins (1).

**23.** Dispositif de traitement selon la revendication 22, **caractérisé**

**en ce que** l'unité d'alimentation peut être raccordée à différents instruments de soins (1) avec différentes unités d'entraînement et/ou différents outils.

**24.** Dispositif de traitement selon la revendication 23, **caractérisé**

**en ce que** l'unité d'alimentation détecte automatiquement un instrument de soins (1) raccordé.

**25.** Dispositif de traitement selon l'une des revendications précédentes, **caractérisé**

**en ce que** le réglage de débit du milieu de refroidissement est au moins temporairement désactivable en fonction du débit d'enlèvement de l'outil ou du couple appliqué par l'outil.

**26.** Procédé pour la mise en service d'un dispositif de traitement, en particulier d'un instrument de soins dentaires (1), un milieu de refroidissement étant conduit vers un point de traitement soigné par un outil (6) tel qu'une fraise dentaire, **caractérisé**

**en ce que** le débit d'enlèvement de l'outil ou le couple appliqué par l'outil sont déterminés, et en ce que le débit du milieu de refroidissement conduit vers le point de traitement est régulé en fonction du débit d'enlèvement de l'outil (6) ou du couple appliqué par l'outil.

Fig. 1

Fig. 2

Fig. 3

Fig. 4

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3568318 A
- US 2984008 A